# FASCICULE DE BREVET EUROPEEN

(11) **EP 0 857 410 B1**
(45) Date de publication et mention de la délivrance du brevet: **08.01.2003**
(21) Numéro de dépôt: 97420244.2
(22) Date de dépôt: 24.12.1997
(51) Int. Cl.: A01D 34/00

(54) **Fil de coupe pour débroussailleuses et taille-bordures**
MÄHFADEN FÜR BUSCH- UND KANTENTRIMMER
CUTTING LINE FOR BUSH- AND EDGETRIMMER

(30) Priorité: 05.02.1997 FR 9701517
(43) Date de publication de la demande: 12.08.1998
(73) Titulaire: SPEED FRANCE, 69658 Arnas (FR)
(72) Inventeur: Legrand, Emmanuel, 01480 Villeneuve (FR)
(74) Mandataire: Bratel, Gérard

(56) Documents cités:
- WO-A-94/13127
- DE-C- 4 005 879
- US-A- 4 186 239
- US-A- 5 463 815

## Description

La présente invention concerne un fil de coupe, destiné à tailler et à couper la végétation, un tel fil de coupe étant utilisable sur des appareils de motoculture à tête rotative communément appelés débroussailleuses et taille-bordures.

Ces appareils sont équipés généralement d'un moteur électrique ou thermique, qui entraîne en rotation, à grande vitesse, une tête tournante supportant un ou plusieurs fils de coupe. Au cours de la rotation de la tête, et sous l'effet de la force centrifuge, le ou les fils de coupe se déploient radialement et balayent ainsi une certaine zone circulaire, dans laquelle ils exercent un effet tranchant sur la végétation rencontrée. De façon connue, les fils de coupe peuvent être des fils de type monofilament ou multifilament, végétaux, synthétiques, métalliques ou métallo-plastiques, et ces fils peuvent posséder soit une section ronde, soit une section polygonale, par exemple carrée ou en étoile.

En cours d'utilisation, de tels fils de coupe engendrent un bruit important et désagréable, s'ajoutant au bruit du moteur d'entraînement de la tête rotative. Ces bruits entraînent une pollution sonore, d'autant plus nuisible que, par leur nature même, les débroussailleuses et taille-bordures sont utilisés en milieu extérieur. Des prescriptions règlementaires, visant à limiter le bruit de ces appareils à un niveau jugé acceptable, sont d'ailleurs en cours d'élaboration.

Pour tenter de réduire le bruit engendré par les fils de coupe, en cours d'utilisation, diverses solutions ont été déjà proposées.

Ainsi, la demande de brevet français 2658698 (équivalente au brevet allemand 4005879) propose de creuser dans le fil de coupe des rainures longitudinales, droites ou hélicoïdales, de section arrondie ou anguleuse, continues ou discontinues. Ces rainures ont une efficacité assez limitée, en ce qui concerne la réduction du bruit, et leur présence conduit à une diminution non négligeable de la section du fil de coupe, donc à un affaiblissement mécanique de ce fil. Comme on le comprend aisément, tout creusement supplémentaire de ces rainures qui viserait à améliorer leur efficacité, aurait pour conséquence d'affaiblir encore plus le fil de coupe, et de le rendre cassant. En variante, le document précité propose de former sur le fil de coupe des saillies ou nervures, au lieu de rainures, mais ceci est techniquement difficile et économiquement coûteux à obtenir, dans le cadre d'une production industrielle. Une solution analogue, avec nervures hélicoïdales, est évoquée dans la demande de brevet internationale WO 9413127 (voir figure 29).

Une autre solution connue (voir par exemple le modèle d'utilité allemand 9412925 et la demande de brevet européen correspondante 0696414) consiste, pour réduire le bruit, à torsader le fil de coupe. Toutefois, cette solution n'est applicable qu'à un fil de coupe de section polygonale, notamment de section carrée, et elle ne peut concerner des fils de coupe de section ronde qui représentent encore, actuellement, 80% de la production. Par ailleurs, la torsion du fil altère sa qualité de surface ; elle complique et renchérit aussi la fabrication de ce fil.

On a aussi proposé des fils de coupe à profil spécial, en "goutte d'eau" ou en aile d'avion, censé améliorer la pénétration dans l'air. Cette solution permet seulement une réduction assez faible du bruit, et n'est donc pas particulièrement performante.

Enfin on peut citer des tentatives de réalisation de fils de coupe présentant en surface de petits alvéoles, à la manière d'une balle de golf. Outre les difficultés de fabrication, cette dernière solution conduit à une altération de la qualité de surface du fil.

La présente invention vise à éviter ces inconvénients, en fournissant un fil de coupe perfectionné, procurant une réduction sensible du bruit de fonctionnement, sans altérer les propriétés essentielles du fil et en particulier sans l'affaiblir mécaniquement, et même en le renforçant ceci tout en conservant un mode de production industrielle relativement simple et économique, la solution proposée étant applicable notamment à des fils de coupe de section ronde, tout en restant compatible avec des fils de section autre que ronde.

A cet effet, l'invention a pour objet un fil de coupe pour débroussailleuses et taille-bordures, le fil comportant, autour d'une âme centrale, des parties en saillie hélicoïdales pour réduire son bruit de fonctionnement, et ce fil étant caractérisé en ce qu'il est constitué par un fil d'âme autour duquel est enroulé, en hélice, au moins un fil d'habillage de section plus petite que celle du fil d'âme.

Ainsi l'idée inventive à la base de la présente invention consiste à habiller un monofilament pour débrousailleuses ou taille-bordures, nommé ici "fil d'âme", d'un ou plusieurs fils auxiliaires, de plus petite section, appelés ici "fils d'habillage". Cet habillage permet de créer un relief orienté sur le fil de coupe final, le relief obtenu ayant pour affet d'améliorer le coefficient de pénétration dans l'air du fil de coupe en rotation, et par conséquent de réduire les nuisances sonores en cours de fonctionnement, en comparaison avec un fil de débroussailleuses traditionnel. Le choix du nombre des fils d'habillage, de leur section, et du pas des hélices selon lesquelles sont enroulés ces fils d'habillage, permet d'ajuster le gain de décibels, en fonction du résultat souhaité.

Par ailleurs, le principe retenu de l'adjonction d'un ou plusieurs fils d'habillage évite tout affaiblissement du fil de coupe (contrairement aux réalisations connues comportant des alvéoles ou des gorges creusées dans le fil), et il procure même un renforcement du fil de coupe, en créant une sorte d'armature extérieure, présente sur toute la longueur du fil de coupe.

Selon une première forme de réalisation de l'invention, le fil d'âme est pourvu d'un seul fil d'habillage enroulé en hélice.

Selon une autre forme de réalisation de l'invention, le fil d'âme est pourvu de deux fils d'habillage enroulés en hélices parallèles, de même sens et de même pas. De préférence, les deux fils d'habillage sont ici enroulés suivant deux hélices parallèles de même pas et diamétralement opposées par rapport à l'axe central du fil de coupe, toute section de ce fil de coupe étant ainsi symétrique.

Selon encore une autre forme de réalisation de l'invention, le fil d'âme est pourvu de deux fils d'habillage enroulés en hélices de même pas mais de sens opposés, présentant des points de croisement.

Avantageusement, le ou les fils d'habillage sont fixés sur le fil d'âme, autour duquel ils sont enroulés en hélice, ceci notamment par collage, par fusion, par rétraction ou par recouvrement par une peau extérieure, de manière à éviter que le ou les fils d'habillage ne se désolidarisent du fil d'âme pendant l'utilisation du fil de coupe.

Le fil d'âme possède de préférence une section ronde, tandis que le ou les fils d'habillage peuvent posséder une section ronde, carrée, rectangulaire, triangulaire ou autre. Un fil d'habillage de section rectangulaire, se présentant comme une bandelette, peut être facilement appliqué et fixé "à plat" sur le fil d'âme. Des fils d'habillage de section triangulaire, ou autre section polygonale, ont aussi pour avantage d'améliorer, le pouvoir de coupe, par leurs arêtes, tout en réduisant le bruit.

Le fil d'âme est réalisable, de façon traditionnelle, comme un fil en polyamide. Les fils d'habillage sont aussi réalisables en polyamide, auquel cas leur fixation sur le fil d'âme peut être obtenue par fusion ou soudure, notamment en faisant passer les fils ensemble dans des acides, tels que l'acide formique, provoquant une dissolution superficielle. Les fils d'habillage peuvent aussi être d'une nature différente du fils d'âme, et notamment des fils en matière synthétique chargés de fibres de verre, en vue d'améliorer le pouvoir coupant du fil de coupe, et d'augmenter sa résistance mécanique en évitant ainsi le risque de rupture à l'oeillet. Plus généralement, le fil d'âme et le ou les fils d'habillage peuvent être de nature synthétique, végétale, métallique, métallo-plastique ou autre, et le caractère "composite" du fil de coupe objet de l'invention permet d'optimiser sa composition, en fonction des propriétés principales et secondaires recherchées, par exemple la dégradabilité.

L'invention sera mieux comprise à l'aide de la description qui suit, en référence au dessin schématique annexé représentant, à titre d'exemples, quelques formes de réalisation de ce fil de coupe pour débroussailleuses et taille-bordures :
Figure 1 est une vue de côté d'un tronçon de fil de coupe conforme à la présente invention, pourvu d'un seul fil d'habillage ;
Figure 2 est une vue de côté d'un tronçon de fil de coupe pourvu de deux fils d'habillage enroulés dans le même sens ;
Figure 3 est une vue de côté d'un tronçon de fil de coupe pourvu de deux fils d'habillage enroulés en sens opposés ;
Figure 4 est une vue de côté d'un autre tronçon de fil de coupe pourvu de deux fils d'habillage enroulés dans le même sens ;
Figure 5 représente la section symétrique du fil de coupe selon la figure 4 ;
Figure 6 est une vue de côté, très schématique, d'une installation permettant la fabrication du fil de coupe selon les figures 4 et 5.

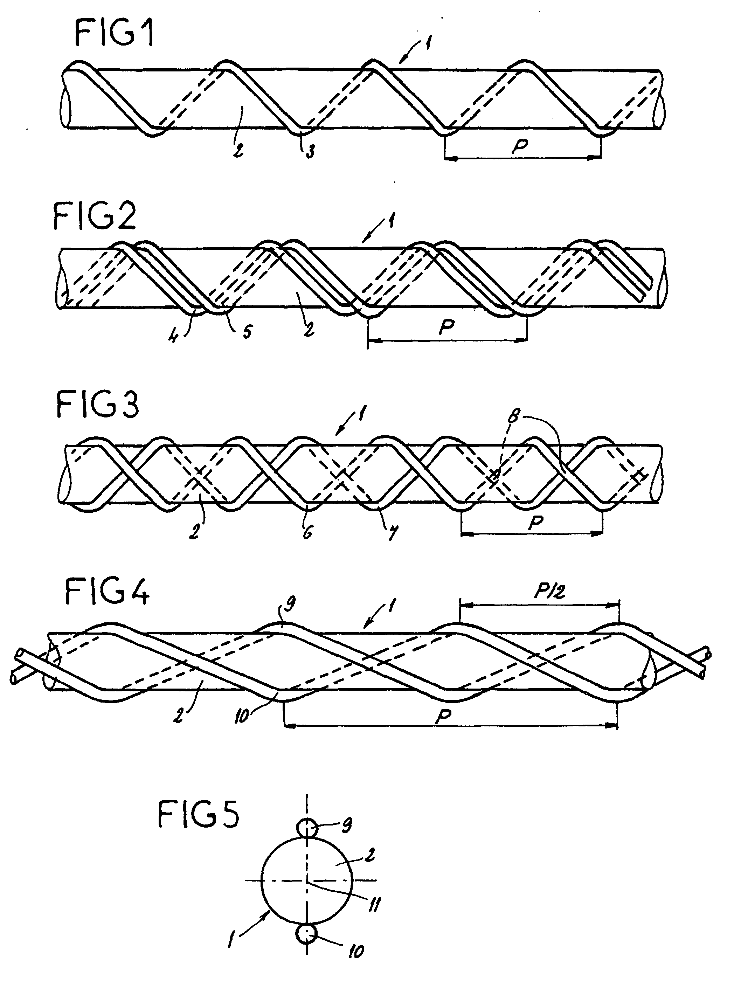

La figure 1 montre un tronçon d'un fil de coupe, désigné dans son ensemble par le repère 1, pour débroussailleuses ou taille-bordures. Le fil de coupe 1 se compose d'une fil d'âme 2, de section ronde, et d'un unique fil d'habillage 3, de plus faible section, qui est enroulé en hélice autour du fil d'âme 2, l'hélice formée par le fil d'habillage 3 possédant un certain pas P.

La figure 2 montre une première variante de ce fil de coupe 1, dans laquelle deux fils d'habillage 4 et 5 sont enroulés en hélice, dans le même sens, autour du fil d'âme 2 de section ronde. Les deux fils d'habillage 4 et 5 forment deux hélices parallèles, de même pas P, et ils sont ici pratiquement adjacents l'un de l'autre.

La figure 3 montre un autre fil de coupe 1, dans lequel deux fils d'habillage 6 et 7 sont enroulés en hélice, mais en sens opposés l'un par rapport à l'autre, autour du fil d'âme 2 de section ronde. Les deux fils d'habillage 6 et 7 forment deux hélices de même pas P, et ils comportent des points de croisement 8.

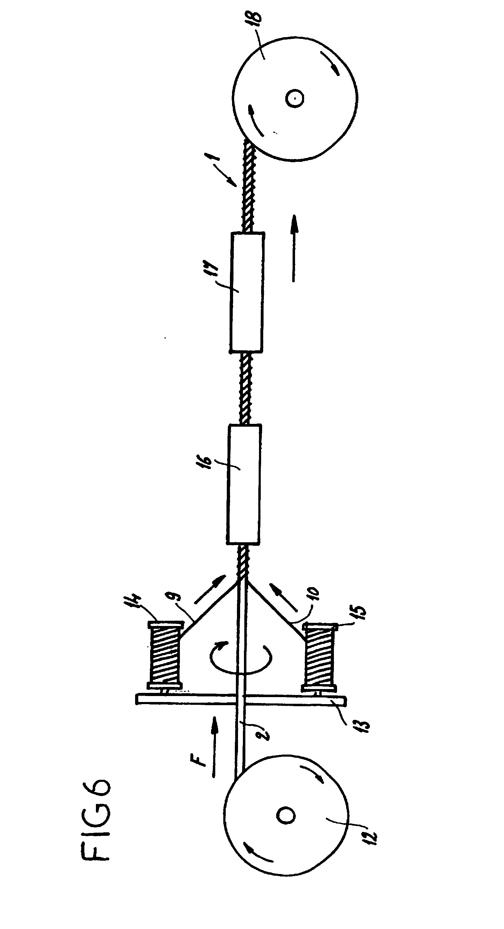

Les figures 4 et 5 montrent encore un autre fil de coupe 1, dans lequel deux fils d'habillage 9 et 10 sont enroulés en hélice, dans le même sens, autour du fil d'âme 2 de section ronde. Les deux fils d'habillage 9 et 10 forment deux hélices parallèles, de même pas P. Ces deux hélices sont diamétralement opposées, par rapport à l'axe central 11 du fil de coupe 1 ; autrement dit, toute section de ce fil 1, telle que celle montrée sur la figure 5, est symétrique : les positions des deux fils d'habillage 9 et 10 sont symétriques par rapport à l'axe central 11 du fil d'âme 2. Il peut aussi être considéré que les deux hélices, formées respectivement par les deux fils d'habillage 9 et 10, sont ici décalées l'une par rapport à l'autre, en direction axiale, d'un demi-pas P/2 (se référer de nouveau à la figure 4).

La figure 6 représente, très schématiquement, une installation pour la fabrication du fil de coupe 1 à section symétrique selon les figures 4 et 5.

Le fil d'âme 2 est initialement enroulé autour d'une bobine 12, qui se dévide suivant la flèche F. Un support 13, monté tournant autour de l'axe de déplacement du fil d'âme 2, porte deux bobines auxiliaires 14 et 15, diamétralement opposées, sur lesquelles sont enroulées respectivement les deux fils d'habillage 9 et 10. La combinaison de l'avance du fil d'âme 2, et de la rotation du support 13, permet de déposer les deux fils d'habillage 9 et 10 autour du fil d'âme 2, en les enroulant suivant deux hélices entrelacées, selon la configuration symétrique précédemment décrite.

L'ensemble formé par le fil d'âme 2 et par les deux fils d'habillage 9 et 10, enroulés autour de ce fil d'âme 2, passe ensuite à travers un poste 16 d'application de colle thermofusible ou de mise en contact avec de l'acide formique, puis dans un four 17 de fixation et de séchage. Le fil de coupe 1 finalement obtenu, dont les deux fils d'habillage 9 et 10 ont été fixés sur le fil d'âme 2, est enroulé autour d'une bobine réceptrice 18.

A titre d'exemple, un fil de coupe 1 selon les figures 4 et 5 est réalisable, notamment par le procédé illustré à la figure 6, avec un fil d'âme 2 ayant un diamètre de 2,2 mm, et deux fils d'habillage 9 et 10 ayant chacun un diamètre de 0,1 mm, de sorte que le diamètre final d'un tel fil de coupe est de 2,4 mm. Les essais effectués par le Demandeur ont mis en évidence un fort gain sonore, d'environ 15 décibels, pour un tel fil tournant à une vitesse de 5000 tours/minute, en comparaison avec un fil de coupe classique de même diamètre.

L'on ne s'éloignerait pas du cadre de l'invention, telle que définie dans les revendications :
- en utilisant un ou plusieurs fils d'habillage de sections diverses, non obligatoirement ronde, mais pouvant aussi présenter un profil carré, rectangulaire, triangulaire ou d'une autre forme... ;
- en enroulant le ou les fils d'habillage, autour du fil d'âme, suivant des hélices dont le pas P est plus ou moins serré, en fonction du diamètre du fil d'âme et du gain de décibels souhaité ;
- en assemblant le ou les fils d'habillage au fil d'âme par toute technique appropriée : guipage, tricotage, tressage ou tout autre procédé... ;
- en fixant définitivement le ou les fils d'habillage sur le fil d'âme par tout moyen, tel que collage, fusion, recouvrement par extrusion d'une peau, ou forte rétraction du ou des fils d'habillage.

## Revendications

1. Fil de coupe pour débroussailleuses et taille-bordures, à tête rotative, le fil comportant, autour d'une âme centrale, des parties en saillie hélicoïdales pour réduire son bruit de fonctionnement, caractérisé en ce qu'il est constitué par un fil d'âme (2) autour duquel est enroulé, en hélice, au moins un fil d'habillage (3;4,5;6,7;9,10) de section plus petite que celle du fil d'âme (2).

2. Fil de coupe selon la revendication 1, **caractérisé en ce que** le fil d'âme (2) est pourvu d'un seul fil d'habillage (3) enroulé en hélice.

3. Fil de coupe selon la revendication 1, **caractérisé en ce que** le fil d'âme (2) est pourvu de deux fils d'habillage (4,5;9,10) enroulés en hélices parallèles, de même sens et de même pas (P).

4. Fil de coupe selon la revendication 3, **caractérisé en ce que** les deux fils d'habillage (9,10) sont enroulés suivant deux hélices parallèles, de même pas (P) et diamétralement opposées par rapport à l'axe central (11) du fil de coupe (1), toute section de ce fil de coupe (1) étant ainsi symétrique.

5. Fil de coupe selon la revendication 1, **caractérisé en ce que** le fil d'âme (2) est pourvu de deux fils d'habillage (6,7) enroulés en hélices de même pas (P) mais de sens opposés, présentant des points de croisement (8).

6. Fil de coupe selon l'une quelconque des revendications 1 à 5, **caractérisée en ce que** le ou les fils d'habillage (3; 4, 5;6,7;9,10) sont fixés sur le fil d'âme (2), autour duquel ils sont enroulés en hélice, notamment par collage, par fusion, par rétraction ou par recouvrement par une peau extérieure.

7. Fil de coupe selon l'une quelconque des revendications 1 à 6, **caractérisé en ce que** le fil d'âme (2) possède une section ronde, tandis que le ou les fils d'habillage (3;4,5;6,7;9,10) possèdent une section ronde, carrée, rectangulaire ou triangulaire.

## Claims

1. Cutting line for strimmers and edge trimmers with a rotary head, the line comprising spiral projecting parts around a central core in order to reduce its operating noise, **characterised in that** it consists of a core line (2) around which there is wound in a spiral at least one covering line (3;4,5;6,7;9,10) with a cross-section smaller than that of the core line (2).

2. Cutting line according to claim 1, **characterised in that** the core line (2) is provided with a single covering line (3) which is wound in a spiral.

3. Cutting line according to claim 1, **characterised in that** the core line (2) is provided with two covering lines (4,5;9,10) which are wound in spirals which are parallel, in the same direction and with the same pitch (P).

4. Cutting line according to claim 3, **characterised in that** the two covering lines (9, 10) are wound according to two spirals which are parallel, with the same pitch (P) and diametrically opposite relative to the central axis (11) of the cutting line (1), any cross-section of this cutting line (1) thus being symmetrical.

5. Cutting line according to claim 1, **characterised in that** the core line (2) is provided with two covering lines (6,7) which are wound in spirals which have the same pitch (P) but in opposite directions, with points of intersection (8).

6. Cutting line according to any one of claims 1 to 5, **characterised in that** the cutting line(s) (3;4,5;6,7;9,10) is/are secured on the core line (2), around which it is/they are wound in a spiral, in particular by being glued, by fusion, by retraction or by covering by an outer skin.

7. Cutting line according to any one of claims 1 to 6, **characterised in that** the core line (2) has a round cross-section, whereas the covering line(s) (3;4,5;6,7;9,10) has/have a cross-section which is round, square, rectangular or triangular.

## Patentansprüche

1. Mähfaden für Freischneider und Kantentrimmer mit Drehkopf, wobei der Faden um einen zentralen Kern herum hervorstehende spiralförmige Bereiche umfasst, um den Betriebslärm zu reduzieren, **dadurch gekennzeichnet, dass** er aus einem Fadenkern (2) gebildet ist, um den in Spiralform mindestens ein Umkleidungsfaden (3; 4, 5; 6, 7; 9, 10) gewickelt ist, dessen Querschnitt kleiner ist als derjenige des Fadenkerns (2).

2. Mähfaden nach Anspruch 1, **dadurch gekennzeichnet, dass** der Fadenkern (2) mit einem einzigen Umkleidungsfaden (3) versehen ist, der in Spiralform gewickelt ist.

3. Mähfaden nach Anspruch 1, **dadurch gekennzeichnet, dass** der Fadenkern (2) mit zwei Umkleidungsfäden (4, 5; 9, 10) versehen ist, die spiralförmig in gleicher Richtung und in gleicher Ganghöhe (P) parallel zueinander gewickelt sind.

4. Mähfaden nach Anspruch 3, **dadurch gekennzeichnet, dass** die zwei Umkleidungsfäden (9, 10) gemäß zwei parallelen Spiralformen gewickelt sind, mit gleicher Ganghöhe (P) und in Bezug auf die Zentralachse (11) des Mähfadens (1) einander diametral gegenüberliegend, wobei jeder Abschnitt dieses Mähfadens (1) folglich symmetrisch ist.

5. Mähfaden nach Anspruch 1, **dadurch gekennzeichnet, dass** der Fadenkern (2) mit zwei Umkleidungsfäden (6, 7) versehen ist, die in Spiralformen mit gleicher Ganghöhe (P), aber in entgegengesetzter Richtung gewickelt sind, wobei sie Kreuzungspunkte (8) aufweisen.

6. Mähfaden nach einem der Ansprüche 1 bis 5, **dadurch gekennzeichnet, dass** der Umkleidungsfaden oder die Umkleidungsfäden (3; 4, 5; 6, 7; 9, 10) auf dem Fadenkern (2), um den sie spiralförmig herumgewickelt sind, insbesondere durch Kleben, durch Schmelzen, durch Schrumpfen oder durch Überziehen mit einer Außenhaut befestigt sind.

7. Mähfaden nach einem der Ansprüche 1 bis 6, **dadurch gekennzeichnet, dass** der Fadenkern (2) einen runden Querschnitt besitzt, während der Umkleidungsfaden oder die Umkleidungsfäden (3; 4, 5; 6, 7; 9, 10) einen runden, quadratischen, rechteckigen oder dreieckigen Querschnitt besitzen.
